# EUROPEAN PATENT SPECIFICATION

(11) **EP 3 971 350 B1**
(45) Date of publication and mention of the grant of the patent: **30.10.2024**
(21) Application number: 21198265.7
(22) Date of filing: 22.09.2021
(51) Int. Cl.: E03C 1/32, E03C 1/02, F16K 5/04, F16K 11/08, F16K 31/60

(54) **TAP FOR FILLING VALVE OF A FLUSH TANK OF SANITARY APPLIANCE**
VENTIL FÜR EINEN EINLASSVENTIL EINES SPÜLKASTENS
UN ROBINET POUR UNE VANNE DE REMPLISSAGE D'UN RESERVOIR DE CHASSE D'APPAREIL SANITAIRE

(30) Priority: 22.09.2020 IT 202000022345
(43) Date of publication of application: 23.03.2022
(73) Proprietor: OLI - SISTEMAS SANITARIOS, S.A., 3800-314 Aveiro (PT)
(72) Inventor: DE ALMEIDA MARTINS ANTUNES, Rogerio, 3800-314 Aveiro (PT); SANTOS PEREIRA, Bruno, 3800-314 Aveiro (PT)
(74) Representative: Studio Torta S.p.A.

(56) References cited:
- EP-A1- 3 705 647
- CN-A- 106 369 217
- DE-A1- 3 030 447

## Description

### CROSS-REFERENCE TO RELATED APPLICATIONS

This patent application claims priority from Italian patent application no. 102020000022345 filed on 22/09/2020.

### TECHNICAL FIELD

This invention relates to a tap for a filling device of a flushing tank of a sanitary appliance.

### BACKGROUND ART

As known, a flushing tank of a sanitary appliance is generally provided, in addition to a drain valve, with a filling device as well, which is connected to the mains water to fill the tank after the water has been drained from the sanitary appliance.

Various types of filling devices for flushing tanks are known. In general, filling devices for flushing tanks tend to accumulate deposits carried by the mains water (lime scale etc.) that may, in the long term, cause malfunctions and breakdowns, especially (but not only) if membrane backpressure valves are used. On the other hand, access to the filling devices, in particular if mounted in in-wall or embedded flushing tanks, is not easy. In addition, if you wish to clean it, in general, you need to disassemble the filling device, disconnecting it from the mains water. Finally, the cleaning of the filling devices necessitates complicated operations.

Documents CN106369217B and DE3030447A, for example, disclose taps incorporated with a filter. T

### DISCLOSURE OF INVENTION

One purpose of this invention is that of providing a tap for a filling device of a flushing tank of a sanitary appliance that overcomes the drawbacks mentioned above.

This invention, therefore, relates to a tap for a filling device of a flushing tank of a sanitary appliance as defined in essential terms in the appended claim 1 and, in its additional features, in the dependent claims.

The tap of the invention is equipped with an integrated filter, which makes it possible to reduce, or even eliminate, the need for cleaning the filling device connected to the tap.

The cleaning of the tap of the invention is carried out by directly using the flow of water from the mains; in addition, the tap can also be manually cleaned, without, however, requiring the disassembly of the tap and its detachment from the mains.

The tap of the invention enables, in addition, an extremely quick and simple assembly and mounting, and it can be mounted in different positions in relation to the flushing tank (in particular, on both sides, depending on the position of the connection to the mains water).

### BRIEF DESCRIPTION OF THE DRAWINGS

Additional features and advantages of this invention will appear clearer from the description that follows of a non-limiting embodiment thereof, with reference to the figures in the attached drawings, wherein:
- Figure 1 is a perspective view of a tap for a filling device of a flushing tank of a sanitary appliance according to the invention;
- Figure 2 is an exploded perspective view of the tap in Figure 1;
- Figure 3 is a longitudinal, cross-section view of the tap in Figure 1;
- Figure 4 is a perspective view of a component of the tap in Figure 1, shown in isolation;
- Figure 5 is a partially cross-section perspective view of the component in Figure 4;
- Figures 6, 7, and 8 are additional, longitudinal cross-section views of the tap of the invention in respective operating positions;
- Figure 9 is a perspective view of the tap of the invention in an additional operating position.

### BEST MODE FOR CARRYING OUT THE INVENTION

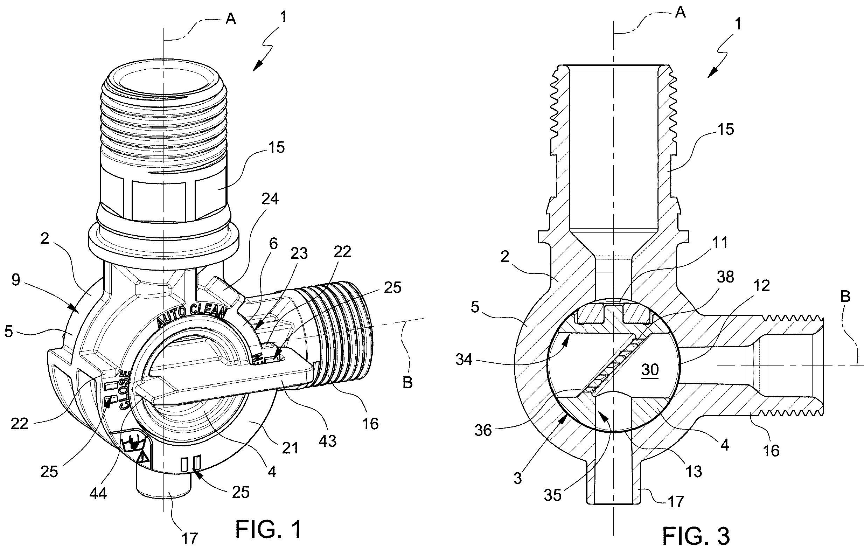

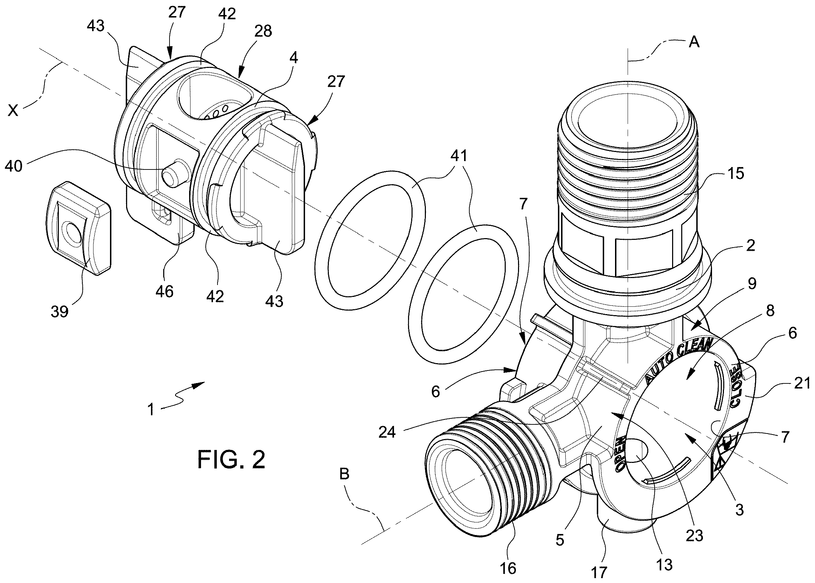

In Figures 1 and 2, the reference number 1 indicates, as a whole, a tap for a filling device of a flushing tank of a sanitary appliance.

The tap 1 comprises a hollow body 2, provided with an internal seat 3; and a removable cartridge 4, housed in a removable fashion in the seat 3 and able to rotate in the seat 3 with respect to the body 2 to assume a plurality of operating positions.

With reference, too, to Figure 3, the body 2 is basically ring-shaped and has a lateral wall 5 that extends between two opposite, annular end edges 6 that delimit corresponding openings 7 of the body 2.

The wall 5 has an internal lateral surface 8 that delimits the seat 3; and an outer lateral surface 9, opposite the surface 8.

The body 2 has three openings 11, 12, and 13 formed through the wall 5 and facing the seat 3 and communicating with the seat 3.

The openings 11, 12, 13 communicate with respective ducts 15, 16, 17 that extend from the body 2, in particular from the surface 9, along respective straight axes.

In particular, one opening 11 is connected to an inlet duct 15; another opening 12 is connected to an outlet duct 16; and another opening 13 is connected to a drain duct 17.

The openings 11, 12, 13 are positioned angularly staggered along the wall 5.

In the preferred embodiment illustrated, the openings 11, 12, 13 are arranged in a T, i.e., they are positioned at 90° to each other: the openings 11, 12 connected to the inlet duct 15 and to the outlet duct 16 are arranged at 90° from each other; the opening 13 connected to the drain duct is arranged at 90° with respect to the opening 12 connected to the outlet duct 14 and diametrically opposite the opening 11 connected to the inlet duct 15.

The inlet duct 15 and the outlet duct 16 extend along corresponding axes A, B that are orthogonal to each other; and the drain duct 17 is aligned and parallel to the inlet duct 15 along the axis A.

The inlet duct 15 and the outlet duct 16 can be connected, for example via respective threaded portions or couplings of another kind, to other respective tubes or joints. In particular, the inlet duct 15 is intended to connect to a supply tube for water coming from the mains; and the outlet duct 16 is intended to connect to the filling device of the flushing tank, which may be of any known type.

At least one of the edges 6 or, as in the preferred embodiment illustrated, each of the edges 6 is provided with a radially outer flange portion 21 that extends between two angularly opposite ends 22.

The edge 6 has a slot 23 connected to the flange portion 21; for example, the slot 23 is defined by an interruption of the flange portion 21 (the flange portion 21 is interrupted along the edge 6 and does not form a complete ring along the whole edge 6) and is delimited laterally by one end 22 of the flange portion 21 and by a stop projection 24 that extends radially from the surface 9.

The edge 6 has a series of positioning slots 25, defined, for example, by corresponding pairs of jutting parts that sit side by side and parallel and that project from one front face of the flange portion 21. The positioning slots 25 are positioned at 90° from each other along the edge 6, to the two ends 22 of the flange portion 21 and in a central position between the ends 22.

The edge 6 bears indications (graphic and/or written symbols) associated with respective operating positions of the cartridge, as will be clarified below.

The cartridge 4 is shaped so as to be inserted and to rotate in the seat 3.

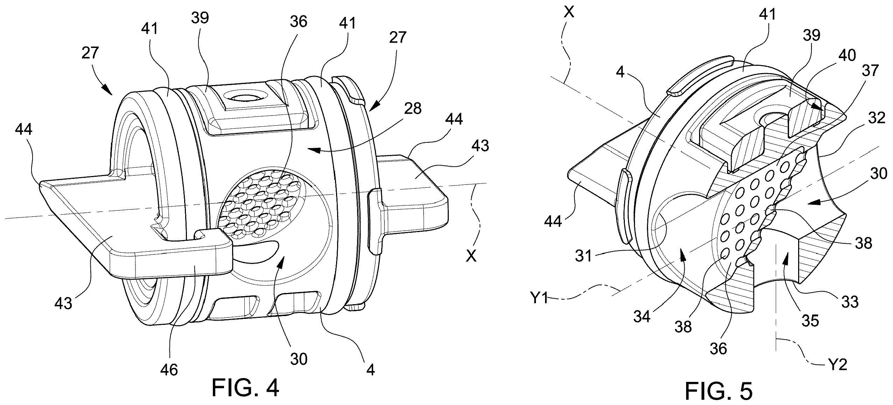

With reference to Figures 4 and 5 as well, the cartridge 4 has a generically cylindrical shape and extends along and around a longitudinal axis X centrally located between two axial ends 27 that are opposite and closed. It has an outer lateral surface 28 that faces the internal lateral surface 8 of the seat 3.

The cartridge 4 is provided with an internal, T-shaped channel 30, which has three openings 31, 32, 33 shaped on the surface 28 and positioned at 90° to each other.

The channel 30 has a diametrical branch 34, which crosses the cartridge 4 diametrically between a pair of openings 31, 32 along a first longitudinal axis Y1; and a lateral branch 35, which starts from the centre of the diametrical branch 34 and extends along a second longitudinal axis Y2, orthogonal to the first longitudinal axis Y1, and ends with the opening 33.

The cartridge 4 is provided with a filter 36, positioned in the channel 30.

In particular, the filter 36 is positioned along the diametrical branch 34 so as to intercept the liquid flow passing through the opening 31 and each of the other two openings 32, 33.

In the example shown, the filter 36 is defined by a drilled plate 37, for example a flat one, provided with a plurality od through holes 38 parallel to each other.

The filter 36 is inclined with respect to each of the arms 34, 35 and, thus, to respective longitudinal axes Y1, Y2 of the arms 34, 35, for example of approximately 45° with respect to the longitudinal axes Y1, Y2.

The holes 38 are straight and parallel to each other.

The holes 38 are preferably parallel to the longitudinal axis Y1 of the arm 34; the holes 38 are, thus, inclined with respect to corresponding faces (for example, flat, parallel faces) opposite the plate 37.

The holes 38 are uniformly spaced on the filter 36 and are preferably, but not necessarily, flared towards the openings 32, 33, extending between two opposite ends, placed on the two faces opposite the plate 37, with different dimensions to each other.

For example, the holes 38 are circular (have, i.e., a circular cross-section) and extend between respective opposite ends that have different diameters.

For example, but not necessarily, the filter 36 comprises from 5 to 40 holes 38 that are distributed on the filter 36, are approximately 1.2 mm thick (the thickness of the plate 37), have a diameter ranging between 0.4 mm and 2 mm on the face of the plate 37 turned towards the openings 32, 33, and a smaller diameter, ranging between 0.4 mm and 1.2 mm, on the face opposite the plate 37 turned towards the opening 31.

It remains understood that there may be a different number of holes 38, having different shapes and sizes, and they may be distributed in a different way from what is indicated here merely by way of example.

The cartridge 4 is also provided with a shutter 39, positioned on the outer lateral surface 28 in a position diametrically opposite the opening 33 and, thus, at 90° from the other openings 31, 32.

The shutter 39 is, for example, made of an elastomer and is housed in a hollow 40 formed on the surface 28 so as to radially project outside of the hollow 40 and to cooperate, in a fluid-tight manner, with the surface 8 of the seat 3.

The cartridge 4 is also provided with a pair of sealing rings 41 housed in respective annular grooves 42 formed on the surface 28 at respective ends 27 and projecting outside of the grooves 42 in order to cooperate in a fluid-tight manner with the surface 8 of the seat 3.

The ends 27 are provided with respective operating bars 43 projecting axially from the end 27 and perpendicular to the axis X. Each bar 43 has an end indicator 44, positioned at one end of the bar 43 and defined, for example, by a tapering or point of the bar 43.

One of the bars 43 is of a certain length so as not to project beyond the outer lateral surface 28 of the cartridge; the opposite bar 43 has a projection 45 opposite the indicator 44 and projecting beyond the surface 28 and terminating with a U-shaped tooth 46 for hooking a flange portion 21.

The cartridge 4 may be inserted in the seat 3 through one of the openings 7, on the side of the bar 43 without the projection 45. By aligning the projection 45 of the other bar 43 with the slot 23, the cartridge 4 can be inserted until it stops in the seat 3.

Thus, rotating the cartridge 4 via the bar 43, the cartridge 4 is blocked in the seat 3, making the tooth 46 hook the flange portion 21.

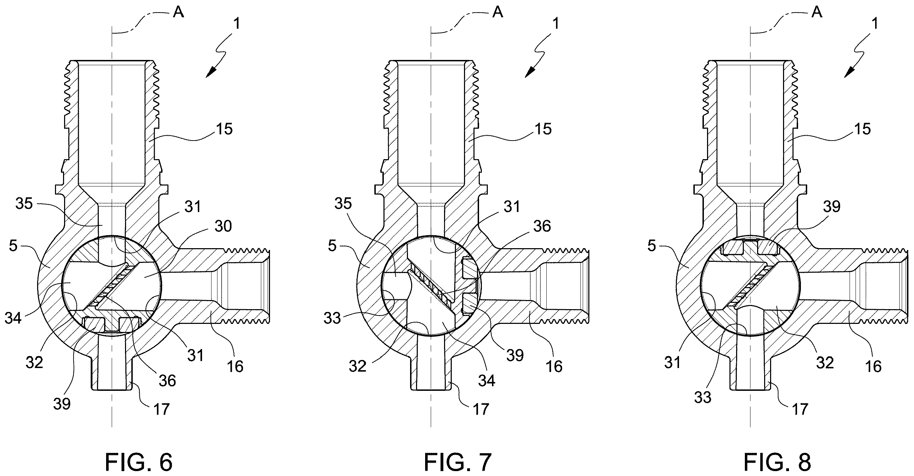

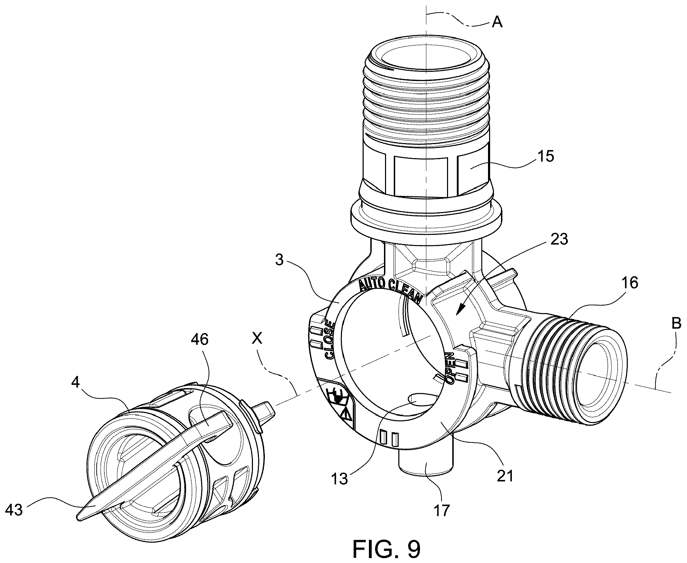

Again, rotating the bar 43, an operating position is then selected from the operating positions that the cartridge assumes rotating in the seat 3; the position selected is indicated by the indicator 44 of the bar 43 in relation to a respective indication on the edge 6:
a) an open position (indicated, for example, by the writing "OPEN" on the edge 6), shown in Figure 6: the openings 33, 31 face the inlet duct 15 and, respectively, the outlet duct 16 and are in hydraulic communication with them; the opening 32 does not communicate with any of the ducts 15, 16, 17 being closed by the lateral wall 5 of the seat 3; the drain duct 17 is closed by the shutter 39. A flow of water coming from the inlet duct 15 (i.e., the mains water) passes through the opening 33, flows into the channel 30, through the filter 36, and then passes through the opening 31 of the outlet duct 16, from which it reaches the filling device in order to fill the flushing tank; any contaminants, deposits, etc. contained in the water are withheld by the filter 36;
b) a cleaning position (indicated, for example, by the writing "AUTOCLEAN" on the edge 6), shown in Figure 7: the openings 31, 32 face the inlet duct 15 and, respectively, the drain duct 17 and are in hydraulic communication with them; the opening 33 does not communicate with any of the ducts 15, 16, 17 being closed by the lateral wall 5 of the seat 3; the shutter 39 closes the outlet duct 16. A flow of water coming from the inlet duct 15 passes through the opening 31, flows into the channel 30, through the filter 36, and then passes through the opening 32 in the drain duct 17, exiting the tap 1; any contaminants, deposits, etc. withheld by the filter 36 and that accumulate in the channel 30 (in particular, in the part of the arm 34 adjacent to the arm 35) are drained via the flow of water;
c) closed position (indicated, for example, by the writing "CLOSE" on the edge 6), shown in Figure 8: the shutter 39 closes the inlet duct 15; the openings 32, 33 face the outlet duct 16 and, respectively, the drain duct 17; the opening 31 does not communicate with any of the ducts 15, 16, 17, being closed by the lateral wall of the seat 3. Since the inlet duct 15 is closed by the shutter 39, the circulation of water within the channel 30 and towards the outlet duct 16 is blocked; the tap 1 does not let any water pass through;
d) extraction and manual cleaning position (indicated, for example, by graphic symbols on the edge 6), shown in Figure 9: the tooth 46 of the bar 43 is aligned with the slot 23 and does not hook, therefore, the flange portion 21, making it possible to extract the cartridge 4 from the seat 3. Once removed from the seat 3, the cartridge 4 can be inspected and, if necessary, thoroughly cleaned.

When the cartridge 4 is placed in an operating position, by rotating the bar 43, the indicator 44 on the bar 43 reaches a corresponding indication on the edge 6 and the tooth 46, continuing to engage the flange portion 21, is made to engage a corresponding positioning slot 25 diametrically opposite the selected indication.

The cartridge passes from one operating position to the other by angular rotations of 90°, a rotation of 45° is only performed in order to reach the extraction operating position.

It is, then, clear that numerous modifications can be made to the tap described and illustrated, and variants thereof produced, which do not depart from the scope of the attached claims.

## Claims

1. A tap (1) for a filling device of a flushing tank of a sanitary appliance, comprising a hollow body (2), provided with an internal seat (3) delimited by an internal lateral surface (8), and a cartridge (4), housed in the seat (3) and rotating in the seat (3) with respect to the body (2) to assume a plurality of operating positions; the body (2) comprising an inlet duct (15), an outlet duct (16) and a drain duct (17) which ducts (15, 16, 17) extend from the body (2) and communicate with the seat (3); the cartridge (4) being provided with an internal channel (30) having a first, a second and a third opening (31, 32, 33) formed on an outer lateral surface (28) of the cartridge (4) and angularly staggered from one another, and a shutter (39), placed on the outer lateral surface (28) of the cartridge (4) and angularly staggered with respect to the openings (31, 32, 33); the cartridge (4) being provided with a filter (36) arranged along the internal channel (30); the cartridge (4) being rotatable in the seat (3) with respect to the body (2) to selectively align respective pairs of openings (31, 32, 33) and the shutter (39) to respective ducts (15, 16, 17) of the body (2); wherein the internal channel (30) has a diametral branch (34), which crosses the cartridge (4) diametrically between the first opening (31) and the second opening (32) along a first longitudinal axis (Y1);
**characterised by**
a lateral branch (35), which departs from the center of the diametral branch (34) and extends along a second longitudinal axis (Y2), orthogonal to the first longitudinal axis (Y1), and ends with the third opening (33); wherein the filter (36) is inclined with respect to each of the diametral and lateral branch (34, 35) and hence to the respective longitudinal axes (Y1, Y2) of the diametral and lateral branch (34, 35).

2. The tap according to claim 1, wherein the cartridge (4) is rotatable in the seat (3) with respect to the body (2) to selectively assume:
a) an open position in which the third opening (33) and the first opening (31) face and are in hydraulic communication with the inlet duct (15) and the outlet duct (16) respectively, while the second opening (32) does not communicate with any of the ducts (15, 16, 17) and is closed by the lateral wall (5) of the seat (3); and the shutter (39) closes the drain duct (17);
b) a cleaning position in which the first opening (31) and the second opening (32) face and are in hydraulic communication with the inlet duct (15) and the drain duct (17) respectively, while the third opening (33) does not communicate with any of the ducts (15, 16, 17) and is closed by the lateral wall (5) of the seat (3); and the shutter (39) closes the outlet duct (16);
c) a closed position in which the shutter (39) closes the inlet duct (15) and the second opening (32) and the third opening (33) face the outlet duct (16) and the drain duct (17) respectively, while the first opening (31) does not communicate with any of the ducts (15, 16, 17) and is closed by the lateral wall (5) of the seat (3).

3. The tap according to claim 1 or 2, wherein the cartridge (4) is housed in a removable way in the seat (3).

4. The tap according to one of the preceding claims, wherein the internal channel (30) is a T-channel and the openings (31, 32, 33) are located on the outer lateral surface (28) of the cartridge (4) at 90° to one another; and wherein the inlet duct (15), the outlet duct (16) and the drain duct (17) are arranged angularly staggered from one another along a lateral wall (5) of the body (2) and are arranged at 90° from one another; the inlet duct (15) and the outlet duct (16) being perpendicular to each other and the drain duct (17) being aligned and parallel to the inlet duct (15).

5. The tap according to one of the preceding claims, wherein the shutter (39) is placed on the outer lateral surface (28) at 90° from the first opening (31) and the second opening (32) and in a diametrically opposite position with respect to the third opening (33).

6. The tap according to one of the preceding claims, wherein the filter (36) is arranged so as to intercept a liquid flow circulating in the channel (30) between the first opening (31) and each of the other two openings (32, 33).

7. The tap according to one of the preceding claims, wherein the filter (36) is defined by a perforated plate (37) having a plurality of through holes (38) parallel to one another.

8. The tap according to claim 7, wherein the holes (38) are straight and parallel to each other and inclined with respect to respective opposite faces of the plate (37).

9. The tap according to one of the preceding claims, comprising at least one operating bar (43) protruding axially from one end (27) of the cartridge (4) and having an end indicator (44), cooperating with an annular end edge (6) of the body (2) provided with indications to indicate respective operating positions of the cartridge (4); and a projection (45) opposite the indicator (44) and protruding beyond the outer lateral surface (28) of the cartridge (4) and having a U-shaped tooth (46) to engage a flange portion (21) of the body (2) and fasten the cartridge (4) in the seat (3).

10. The tap according to claim 9, wherein the edge (6) has a slot (23) through which the U-shaped tooth (46) disengages from the flange portion (21) to allow removal of the cartridge (4) from the seat (3).

11. The tap according to claim 9 or 10, wherein the edge (6) has a series of positioning slots (25) arranged 90° apart from one another along the edge (6) and selectively engaged by the U-shaped tooth (46).

## Patentansprüche

1. Hahn (1) für eine Befüllvorrichtung eines Spülkastens einer Sanitäreinrichtung, umfassend einen Hohlkörper (2), der mit einem inneren Sitz (3) versehen ist, der durch eine innere Seitenfläche (8) begrenzt ist, und eine Patrone (4), die in dem Sitz (3) untergebracht ist und sich in dem Sitz (3) in Bezug auf den Körper (2) dreht, um eine Vielzahl von Betriebspositionen einzunehmen; wobei der Körper (2) eine Einlassleitung (15), eine Auslassleitung (16) und eine Ablassleitung (17) umfasst, wobei sich die Leitungen (15, 16, 17) von dem Körper (2) erstrecken und mit dem Sitz (3) kommunizieren; wobei die Patrone (4) mit einem Innenkanal (30) versehen ist, der eine erste, eine zweite und eine dritte Öffnung (31, 32, 33) aufweist, die an einer äußeren Seitenfläche (28) der Patrone (4) ausgebildet und winkelversetzt zueinander angeordnet sind, und einen Verschluss (39), der auf der äußeren Seitenfläche (28) der Patrone (4) angeordnet und winkelversetzt zu den Öffnungen (31, 32, 33) angeordnet ist; wobei die Patrone (4) mit einem Filter (36) versehen ist, der entlang des Innenkanals (30) angeordnet ist; wobei die Patrone (4) in dem Sitz (3) in Bezug auf den Körper (2) drehbar ist, um jeweilige Paare von Öffnungen (31, 32, 33) und den Verschluss (39) selektiv auf jeweilige Leitungen (15, 16, 17) des Körpers (2) auszurichten; wobei der Innenkanal (30) einen diametralen Zweig (34) aufweist, der die Patrone (4) diametral zwischen der ersten Öffnung (31) und der zweiten Öffnung (32) entlang einer ersten Längsachse (Y1) kreuzt;
**gekennzeichnet durch**
einen lateralen Zweig (35),
der von der Mitte des diametralen Zweigs (34) ausgeht und sich entlang einer zweiten Längsachse (Y2) erstreckt, die orthogonal zur ersten Längsachse (Y1) ist und mit der dritten Öffnung (33) endet; wobei der Filter (36) in Bezug auf jeweils den diametralen und lateralen Zweig (34, 35) und damit auf die jeweiligen Längsachsen (Y1, Y2) des diametralen und lateralen Zweigs (34, 35) geneigt ist.

2. Hahn nach Anspruch 1, wobei die Patrone (4) in dem Sitz (3) in Bezug auf den Körper (2) drehbar ist, um selektiv Folgendes einzunehmen:
a) eine offene Position, in der die dritte Öffnung (33) und die erste Öffnung (31) der Einlassleitung (15) bzw. der Auslassleitung (16) zugewandt sind und mit diesen in hydraulischer Kommunikation stehen, während die zweite Öffnung (32) mit keiner der Leitungen (15, 16, 17) in Kommunikation steht und durch die Seitenwand (5) des Sitzes (3) geschlossen ist; und der Verschluss (39) schließt die Ablassleitung (17);
b) eine Reinigungsposition, in der die erste Öffnung (31) und die zweite Öffnung (32) der Einlassleitung (15) bzw. der Ablassleitung (17) zugewandt sind und mit diesen in hydraulischer Kommunikation stehen, während die dritte Öffnung (33) mit keiner der Leitungen (15, 16, 17) in Kommunikation steht und durch die Seitenwand (5) des Sitzes (3) geschlossen ist; und der Verschluss (39) schließt die Auslassleitung (16);
c) eine geschlossene Position, in der der Verschluss (39) die Einlassleitung (15) schließt und die zweite Öffnung (32) und die dritte Öffnung (33) der Auslassleitung (16) bzw. der Ablassleitung (17) zugewandt sind, während die erste Öffnung (31) mit keiner der Leitungen (15, 16, 17) in Kommunikation steht und durch die Seitenwand (5) des Sitzes (3) geschlossen ist.

3. Hahn nach Anspruch 1 oder 2, wobei die Patrone (4) abnehmbar in dem Sitz (3) untergebracht ist.

4. Hahn nach einem der vorhergehenden Ansprüche, wobei der Innenkanal (30) ein I-Kanal ist und die Öffnungen (31, 32, 33) an der äußeren Seitenfläche (28) der Patrone (4) bei 90° zueinander angeordnet sind; und wobei die Einlassleitung (15), die Auslassleitung (16) und die Ablassleitung (17) winkelversetzt zueinander entlang einer Seitenwand (5) des Körpers (2) angeordnet sind und bei 90° zueinander angeordnet sind; wobei die Einlassleitung (15) und die Auslassleitung (16) senkrecht zueinander sind und die Ablassleitung (17) mit der Einlassleitung (15) ausgerichtet und parallel zu dieser ist.

5. Hahn nach einem der vorhergehenden Ansprüche, wobei der Verschluss (39) auf der äußeren Seitenfläche (28) bei 90° von der ersten Öffnung (31) und der zweiten Öffnung (32) und in einer diametral gegenüberliegenden Position in Bezug auf die dritte Öffnung (33) platziert ist.

6. Hahn nach einem der vorhergehenden Ansprüche, wobei der Filter (36) so angeordnet ist, dass er einen Flüssigkeitsstrom abfängt, der in dem Kanal (30) zwischen der ersten Öffnung (31) und jeder der zwei anderen Öffnungen (32, 33) zirkuliert.

7. Hahn nach einem der vorhergehenden Ansprüche, wobei der Filter (36) durch eine Lochplatte (37) definiert ist, die eine Vielzahl von zueinander parallelen Durchgangslöchern (38) aufweist.

8. Hahn nach Anspruch 7, wobei die Löcher (38) gerade und parallel zueinander sind und in Bezug auf jeweilige gegenüberliegende Flächen der Platte (37) geneigt sind.

9. Hahn nach einem der vorhergehenden Ansprüche, umfassend mindestens eine Betätigungsstange (43), die axial von einem Ende (27) der Patrone (4) vorsteht und eine Endanzeige (44) aufweist, die mit einer ringförmigen Endkante (6) des Körpers (2) zusammenwirkt, die mit Anzeigen versehen ist, um jeweilige Betriebspositionen der Patrone (4) anzuzeigen; und einen Vorsprung (45), der der Anzeige (44) gegenüberliegt und über die äußere Seitenfläche (28) hinaus der Patrone (4) vorsteht und einen U-förmigen Zahn (46) aufweist, um in einen Flanschabschnitt (21) des Körpers (2) einzugreifen und die Patrone (4) in dem Sitz (3) zu befestigen.

10. Hahn nach Anspruch 9, wobei die Kante (6) einen Schlitz (23) aufweist, durch den sich der U-förmige Zahn (46) von dem Flanschabschnitt (21) löst, um ein Entfernen der Patrone (4) aus dem Sitz (3) zu ermöglichen.

11. Hahn nach Anspruch 9 oder 10, wobei die Kante (6) eine Reihe von Positionierungsschlitzen (25) aufweist, die bei 90° voneinander beabstandet entlang der Kante (6) angeordnet sind und selektiv von dem U-förmigen Zahn (46) in Eingriff genommen werden.

## Revendications

1. Robinet (1) pour un dispositif de remplissage d'un réservoir de chasse d'un appareil sanitaire, comprenant un corps creux (2), pourvu d'un siège interne (3) délimité par une surface latérale interne (8), et une cartouche (4), logée dans le siège (3) et tournant dans le siège (3) par rapport au corps (2) pour adopter une pluralité de positions de fonctionnement ; le corps (2) comprenant un conduit d'entrée (15), un conduit de sortie (16) et un conduit d'évacuation (17), ces conduits (15, 16, 17) s'étendent à partir du corps (2) et communiquent avec le siège (3) ; la cartouche (4) étant pourvue d'un canal interne (30) comportant une première, une deuxième et une troisième ouvertures (31, 32, 33) formées sur une surface latérale extérieure (28) de la cartouche (4) et décalées angulairement les unes par rapport aux autres, et d'un obturateur (39), placé sur la surface latérale extérieure (28) de la cartouche (4) et décalé angulairement par rapport aux ouvertures (31, 32, 33) ; la cartouche (4) étant pourvue d'un filtre (36) disposé le long du canal interne (30) ; la cartouche (4) pouvant tourner dans le siège (3) par rapport au corps (2) pour aligner sélectivement les paires respectives d'ouvertures (31, 32, 33) et l'obturateur (39) aux conduits respectifs (15, 16, 17) du corps (2) ; le canal interne (30) comportant une branche diamétrale (34) qui traverse la cartouche (4) diamétralement entre la première ouverture (31) et la deuxième ouverture (32) le long d'un premier axe longitudinal (Y1) ;
**caractérisé par**
une branche latérale (35),
qui part du centre de la branche diamétrale (34) et s'étend le long d'un second axe longitudinal (Y2), orthogonal au premier axe longitudinal (Y1), et se termine par la troisième ouverture (33) ; le filtre (36) étant incliné par rapport à chacune des branches diamétrale et latérale (34, 35) et donc aux axes longitudinaux respectifs (Y1, Y2) de la branche diamétrale et latérale (34, 35).

2. Robinet selon la revendication 1, la cartouche (4) étant rotative dans le siège (3) par rapport au corps (2) pour adopter sélectivement :
a) une position ouverte dans laquelle la troisième ouverture (33) et la première ouverture (31) font face et sont en communication hydraulique avec le conduit d'entrée (15) et le conduit de sortie (16) respectivement, tandis que la deuxième ouverture (32) ne communique avec aucun des conduits (15, 16, 17) et est fermée par la paroi latérale (5) du siège (3) ; et l'obturateur (39) ferme le conduit d'évacuation (17) ;
b) une position de nettoyage dans laquelle la première ouverture (31) et la deuxième ouverture (32) font face et sont en communication hydraulique avec le conduit d'entrée (15) et le conduit d'évacuation (17) respectivement, tandis que la troisième ouverture (33) ne communique avec aucun des conduits (15, 16, 17) et est fermée par la paroi latérale (5) du siège (3) ; et l'obturateur (39) ferme le conduit de sortie (16) ;
c) une position fermée dans laquelle l'obturateur (39) ferme le conduit d'entrée (15) et la deuxième ouverture (32) et la troisième ouverture (33) font face, respectivement, au conduit de sortie (16) et au conduit d'évacuation (17), tandis que la première ouverture (31) ne communique avec aucun des conduits (15, 16, 17) et est fermée par la paroi latérale (5) du siège (3).

3. Robinet selon la revendication 1 ou 2, la cartouche (4) étant logée de manière amovible dans le siège (3).

4. Robinet selon l'une des revendications précédentes, le canal interne (30) étant un canal en « I » et les ouvertures (31, 32, 33) étant situées sur la surface latérale extérieure (28) de la cartouche (4) à 90° les unes des autres ; et le conduit d'entrée (15), le conduit de sortie (16) et le conduit d'évacuation (17) étant disposés en décalage angulaire les uns par rapport aux autres le long d'une paroi latérale (5) du corps (2) et étant disposés à 90° les uns par rapport aux autres ; le conduit d'entrée (15) et le conduit de sortie (16) étant perpendiculaires l'un à l'autre et le conduit d'évacuation (17) étant aligné et parallèle au conduit d'entrée (15).

5. Robinet selon l'une des revendications précédentes, l'obturateur (39) étant placé sur la surface latérale extérieure (28) à 90° de la première ouverture (31) et de la deuxième ouverture (32) et dans une position diamétralement opposée par rapport à la troisième ouverture (33).

6. Robinet selon l'une des revendications précédentes, le filtre (36) étant disposé de manière à intercepter un flux de liquide circulant dans le canal (30) entre la première ouverture (31) et chacune des deux autres ouvertures (32, 33).

7. Robinet selon l'une des revendications précédentes, le filtre (36) étant défini par une plaque perforée (37) comportant une pluralité de trous traversants (38) parallèles les uns aux autres.

8. Robinet selon la revendication 7, les trous (38) étant rectilignes et parallèles les uns aux autres et inclinés par rapport aux faces opposées respectives de la plaque (37).

9. Robinet selon l'une des revendications précédentes, comprenant au moins une barre de fonctionnement (43) dépassant axialement d'une extrémité (27) de la cartouche (4) et comportant un indicateur d'extrémité (44), coopérant avec un bord d'extrémité annulaire (6) du corps (2) pourvu d'indications pour indiquer les positions de fonctionnement respectives de la cartouche (4) ; et une saillie (45) opposée à l'indicateur (44) et dépassant au-delà de la surface latérale extérieure (28) de la cartouche (4) et comportant une dent (46) en forme de « U » pour se mettre en prise avec une partie de bride (21) du corps (2) et fixer la cartouche (4) dans le siège (3).

10. Robinet selon la revendication 9, le bord (6) comportant une fente (23) à travers laquelle la dent (46) en forme de « U » se désengage de la partie de bride (21) pour permettre le retrait de la cartouche (4) du siège (3).

11. Robinet selon la revendication 9 ou 10, le bord (6) comportant une série de fentes de positionnement (25) disposées à 90° à l'écart les unes des autres le long du bord (6) et sélectivement mises en prise par la dent (46) en forme de « U ».
